# EUROPEAN PATENT APPLICATION

(11) **EP 4 734 546 A1**
(43) Date of publication of application: **29.04.2026**
(21) Application number: 24383159.1
(22) Date of filing: 22.10.2024
(51) Int. Cl.: H04R 1/08, H04R 1/02, G09B 5/06, A47B 19/00, F16M 11/00

(54) **A CONCEALABLE APPARATUS ASSEMBLY**

(71) Applicant: Albiral Display Solutions, S.L., 08512 Sant Hipolit De Voltrega (ES)
(72) Inventor: PRESAS SÁNCHEZ, Xavier, 08512 Sant Hipòlit De Voltregà (ES)
(74) Representative: Ponti & Partners, S.L.P

(57) **Abstract**

The present invention relates to a concealable apparatus assembly comprising:
- a support structure (H) to be arranged under a hidden face of a board (1), or panel, adjacent to the contour of a through opening (O1); and
- a bendable elongate apparatus (2) linearly moveable along a longitudinal axis:
- in a lifting linear displacement, between a concealed position at which the bendable elongate apparatus (2) does not protrude through the through opening (O1), and a revealed position at which the bendable elongate apparatus (2) protrudes above the board (1), or panel, and
- in a lowering linear displacement, between the revealed position and the concealed position.

The concealable apparatus assembly further comprises rotation means configured and arranged to rotate the bendable elongate apparatus (2) about the longitudinal axis, in a first direction a determined number of degrees, previously or during an initial portion of the lowering linear displacement.

## Description

### FIELD OF THE INVENTION

The present invention generally relates, to a concealable apparatus assembly capable of providing a concealing and a revealing or use position for a bendable elongate apparatus with respect to the opening of a board or plate, and more specifically to an assembly providing safe retraction for the bendable elongate apparatus.

### BACKGROUND OF THE INVENTION

Concealable apparatus assemblies comprising the features of the preamble of claim 1 are known in the art, i.e. the following features:
- a support structure configured to be arranged under a hidden face of a board, or panel, in a region adjacent to the contour of a through opening thereof or of a plate fitted in a through opening thereof; and
- a bendable elongate apparatus, particularly a microphone, and a mobile support structure supporting said bendable elongate apparatus, wherein said mobile support structure is fixed in a guided manner to said support structure to move linearly, together with the bendable elongate apparatus, along a longitudinal axis:
   - in a lifting linear displacement, between a concealed position at which when the support structure is arranged under said hidden face of said board, or panel, and the bendable elongate apparatus does not protrude through said through opening, and a revealed position at which the bendable elongate apparatus protrudes above the board, or panel, through the through opening, and
   - in a lowering linear displacement, between said revealed position and said concealed position.

Some of said known concealable apparatus assemblies are disclosed in EP2991368B1.

Those already known apparatus assemblies have some shortcomings, such as those appearing when the user has bent the apparatus to orient the same towards him/herself in a way that if the lowering linear displacement was initiated, the apparatus could collide with adjacent objects, such as adjacent screens.

It is, therefore, necessary to provide an alternative to the state of the art which covers the gaps found therein, by providing a concealable apparatus assembly which overcomes the above mentioned shortcomings, and hence provides means to avoid those possible collisions.

### SUMMARY OF THE INVENTION

To that end, the present invention relates to a concealable apparatus assembly, comprising:
- a support structure configured to be arranged under a hidden face of a board, or panel, in a region adjacent to the contour of a through opening thereof or of a plate fitted in a through opening thereof; and
- a bendable elongate apparatus (such as a gooseneck apparatus) and a mobile support structure (such as a carriage) supporting said bendable elongate apparatus, wherein said mobile support structure is fixed in a guided manner to said support structure to move linearly, together with the bendable elongate apparatus, along a longitudinal axis:
   - in a lifting linear displacement, between a concealed position at which when the support structure is arranged under said hidden face of said board, or panel, and the bendable elongate apparatus does not protrude through said through opening, and a revealed position at which the bendable elongate apparatus protrudes above the board, or panel, through the through opening, and
   - in a lowering linear displacement, between said revealed position and said concealed position.

In contrast to the concealable apparatus assemblies known in the prior art, in the one of the present invention, in a characterizing manner, the concealable apparatus assembly further comprises rotation means configured and arranged to rotate the bendable elongate apparatus about said longitudinal axis, in a first direction a determined number of degrees, previously or during an initial portion of said lowering linear displacement.

For some embodiments, the apparatus comprises one or more audiovisual devices, such as a microphone, a speaker, a camera, or a combination thereof, generally placed at the free end of a bendable elongate body or neck, such as a gooseneck.

For an embodiment, said first direction is clockwise while for another embodiment is counterclockwise.

For an embodiment, said determined number of degrees ranges between 15° and 45°, preferably between 30° and 40°.

For an embodiment, the rotation means comprise a spring storing or configured and arranged to store elastic potential energy, and configured and arranged to rotate the bendable elongate apparatus along said first direction a determined number of degrees by releasing the stored elastic potential energy thereon during said initial portion of said lowering linear displacement.

According to an implementation of that embodiment, the spring is a tensile spring, with an end connected to a support base of the bendable elongate apparatus and another end connected to a non-rotatable part of the concealable apparatus assembly.

According to another implementation of that embodiment, the spring is a compression spring, with an end connected to a support base of the bendable elongate apparatus and another end connected to a non-rotatable part of the concealable apparatus assembly.

For an embodiment, the non-rotatable part is defined by a portion of the mobile support structure, the bendable elongate apparatus being rotatably supported in the mobile support structure.

According to an implementation of the above described embodiment, the rotation means are further configured and arranged to rotate the bendable elongate apparatus about the longitudinal axis, in a second direction (counterclockwise or clockwise, depending on the embodiment), opposite to the first direction, a determined number of degrees (generally, the same number of degrees as the rotation in the first direction), during a final portion of said lifting linear displacement, wherein the rotation means, bendable elongate apparatus and spring are configured and arranged so that during the rotation along the second direction the spring is elastically deformed to store said elastic potential energy.

Other alternative mechanisms for making the spring store potential energy are also envisaged by the present invention, for some embodiments.

According to an embodiment, the concealable apparatus assembly of the present invention further comprises a guide arrangement to guide along a guide path the bendable elongate apparatus at least during the initial portion of the lowering linear displacement to rotate about the longitudinal axis, along the first direction, wherein that guide path includes a circumferential component (around the longitudinal axis) and a longitudinal component (according to the lowering linear displacement or parallel thereto).

For an implementation of that embodiment, the guide arrangement is configured and arranged to guide along the above mentioned guide path the bendable elongate apparatus also during the final portion of the lifting linear displacement to rotate together with the bendable elongate apparatus about the longitudinal axis, along the above mentioned second direction.

The guide arrangement is configured and arranged, for an embodiment, to guide along the guide path a support base of the bendable elongate apparatus to rotate together with the bendable elongate apparatus about the longitudinal axis.

In an embodiment, the guide arrangement comprises at least one pin and a guide part, wherein one of the at least one pin and guide part is attached to the bendable elongate apparatus or support base and the other of the at least one pin and guide part is configured to be arranged under said hidden face of a board, or panel, in said region adjacent to the contour of said through opening (attached to the board or panel, or to a plate attached thereto), wherein the at least one pin and guide part are configured and arranged so that said at least one pin interacts with the guide part to travel along said guide path.

According to an implementation of that embodiment, the at least one pin projects from said support base and the guide part is configured to be arranged under the hidden face of the board, or panel, in the region adjacent to the contour of the through opening.

According to a variant of that implementation, the guide part comprises at least one ramp portion onto and along which the at least one pin slides along the guide path.

According to an embodiment, the guide part comprises a tubular part projecting, when attached thereto, from the hidden face of the board, or panel, in the region adjacent to the contour of the through opening, the tubular part being coaligned with the through opening and allowing the bendable elongate apparatus to pass therethrough during the lifting and lowering linear displacements, the tubular part defining at a free edge thereof the above mentioned at least one ramp portion to interact with the at least one pin that radially projects from the support base.

Control means are comprised by the concealable apparatus assembly, for some embodiments, to control the different displacements of the bendable elongate apparatus in collaboration with the linear and/or rotary actuators.

Generally, when the bendable elongate apparatus is at the revealed position, i.e., a t its highest linear position, and rotated according to the second direction the above mentioned determined number of degrees, the rotation and linear displacements of the bendable elongate apparatus are locked, until a control order is received or emitted by the control means to initiate the rotation and linear displacements. Such control order can be generated upon a user acts on a corresponding interface or input device (such as a push-button) of the control means.

In an embodiment, the concealable apparatus assembly of the present invention comprises a linear actuator for providing the linear movement of the mobile support structure and bendable elongate apparatus, and also for providing the rotation of the bendable elongate apparatus by making the same follow the guide path when being linearly moved.

For another embodiment, the said rotation means comprise a rotary actuator configured and arranged to rotate the bendable elongate apparatus about the longitudinal axis, along the first direction a determined number of degrees, previously or during an initial portion of the lowering linear displacement. In this embodiment, neither a spring nor a linear actuator is needed for rotation of the bendable elongate apparatus.

According to an embodiment, the concealable apparatus assembly of the present invention further comprises a retractable screen also configured and arranged to move linearly, along a further longitudinal axis parallel to the above mentioned longitudinal axis, between a concealed position and a revealed position, through a further through opening adjacent the above mentioned through opening, or through the same through opening, wherein the rotation of the bendable elongate apparatus about the longitudinal axis, along the first direction a determined number of degrees, previously or during the initial portion of the lowering linear displacement, is made to avoid interference of the bendable elongate apparatus with that retractable screen, the first direction causing the bendable elongate apparatus move away from the retractable screen.

For an implementation of that embodiment, the retractable screen, once in the revealed position, first adopts a vertical position, but then can be pivoted about a pivot axis that is orthogonal to the further longitudinal axis, so that the lower edge of the screen is approached to a user placed in front of the screen, so that the screen adopts an inclined position to facilitate viewing of the contents displayed thereon by that user.

In that inclined position, when the user has bent the bendable elongate apparatus to orient the same towards him/herself, it would highly possible that the bendable elongate apparatus could collide with the inclined screen if the lowering linear displacement of the same was initiated before the screen returned to its vertical position. With the rotation provided to the bendable elongate apparatus by the assembly of the present invention, previously or during an initial portion of its lowering linear displacement, that collision is avoided.

For an embodiment, the above mentioned control means are configured and arranged to synchronously control the different displacements of the retractable screen and bendable elongate apparatus in collaboration with respective actuation means, and interface and/or input means (such as push-buttons). For an embodiment, for the lifting linear movement, the retractable screen pulls the bendable elongate apparatus, while for another embodiment the linear displacements of the retractable screen and bendable elongate apparatus are mechanically independent (although, generally, electronically synchronized by the control means).

### BRIEF DESCRIPTION OF THE FIGURES

In the following some preferred embodiments of the invention will be described with reference to the enclosed figures, particularly embodiments for which the bendable elongate apparatus is a bendable elongate microphone. They are provided only for illustration purposes without however limiting the scope of the invention.
Figure 1 is a perspective view that shows the assembly of the present invention, for an embodiment, for a position for which the bendable elongate microphone and retractable screen are at their concealed position, and a cover is covering the through opening of the board under which the support structure is attached.
Figure 2 shows, also by means of a perspective view, the same embodiment as Figure 1, but for a position at which the bendable elongate microphone is at its revealed position and the retractable screen is at a revealed position, but adopting a vertical position.
Figure 3 also shows, by means of a perspective view, the same embodiment as Figure 2, but for a position at which the retractable screen is at an inclined position.
Figure 4 is a plan view, for the same embodiment as Figure 3, for the same position for the retractable screen, but for a different position for the bendable elongate microphone, at which the same has been bent to orient the same in front of the screen, and needs to be rotated counterclockwise (as indicated by the arrow line) towards the position at which the microphone has been drawn in dashed lines previously or at an initial portion of the lowering linear displacement.
Figure 5 is a perspective view that shows part of the assembly of the present invention, for an embodiment, showing the bendable elongate microphone at its concealed position.
Figure 6 is an upper perspective partial view that shows part of the assembly of the present invention, for the embodiment of Figure 5, showing the support base of the bendable elongate microphone and the mobile support structure (or carriage).
Figure 7 is a bottom perspective partial view that shows part of the assembly of the present invention, for the embodiment of Figure 6, showing the support base of the bendable elongate microphone, the mobile support structure (or carriage) and the spring that interconnects both.
Figure 8 is a bottom perspective partial view that shows part of the assembly of the present invention, for the embodiment of Figure 5, showing the guide part with two ramp portions defined at a free edge (lower free edge, according to the illustrated position) of a tubular part thereof.
Figure 9 is an upper perspective partial view that shows part of the assembly of the present invention, for the embodiment of Figure 5, for a position differing from that of Figure 8 in that the bendable elongate microphone is at the last portion of its lifting linear displacement, at which pins projecting from support base contact onto and slide along the ramps portions.

### DESCRIPTION OF THE PREFERRED EMBODIMENTS

In the present section an embodiment of the concealable apparatus assembly of the present invention will be described with reference to the Figures.

As shown in the Figures, the present invention relates to a concealable apparatus assembly, comprising:
- a support structure H configured to be arranged under a hidden face of a board 1 (or panel), in a region adjacent to the contour of a through opening O1 of a plate P fitted in a through opening thereof (alternatively, the through opening O1 could be defined in the board 1, without the intermediation of the plate P); and
- a bendable elongate microphone 2 and a mobile support structure S (or carriage) supporting said bendable elongate microphone 2, wherein the mobile support structure S is fixed in a guided manner to the support structure H to move linearly, together with the bendable elongate microphone 2, along a longitudinal axis (orthogonal to the board 1):
   - in a lifting linear displacement, between a concealed position at which when the support structure H is arranged under said hidden face of said board 1, or panel, and the bendable elongate microphone 2 does not protrude through said through opening O1, and a revealed position at which the bendable elongate microphone 2 protrudes above the board 1, through the through opening O1, and
   - in a lowering linear displacement, between said revealed position and said concealed position.

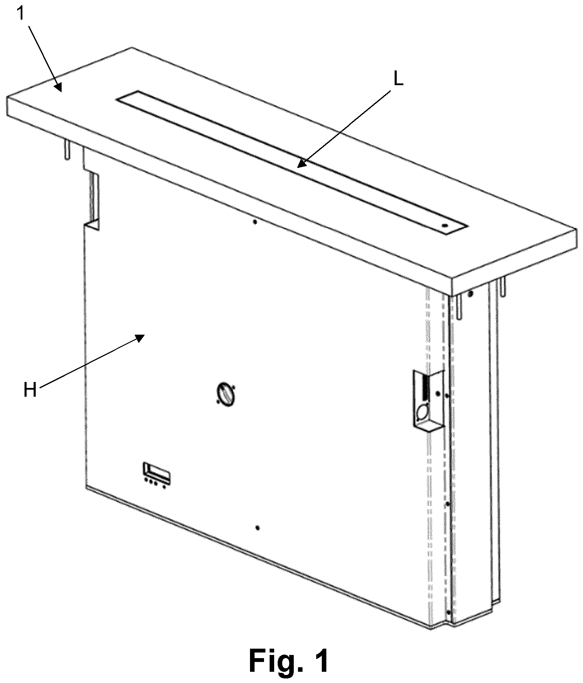

For the embodiment illustrated at least in Figures 1 to 4, the assembly further comprises a retractable screen 3, and also a retractable cable 4 (such as USB-C, HDMI, RJ45, USB-A, etc.). Furthe components (not shown) can be included, such as a push-button module for different conference equipment types, connector module to connect different types of connectors: USB-C, HDMI, RJ45, USB-A, etc.

At the position illustrated in Figure 1, all the components are at their concealed positions and a cover L is covering the through opening of the board 1 under which the support structure H is attached.

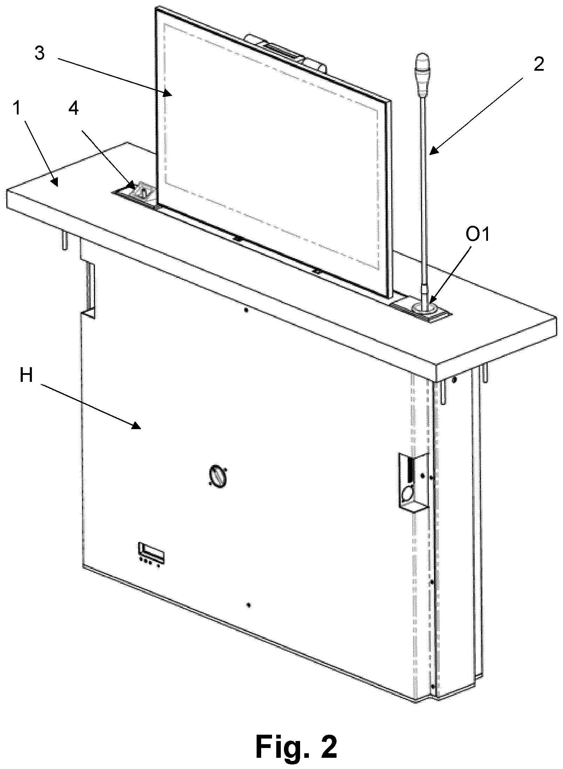

At the position illustrated in Figure 2, the bendable elongate microphone 2 is at its revealed position, after having reached the end of the lifting linear displacement, and the retractable screen 3 is at a revealed position, but adopting a vertical position.

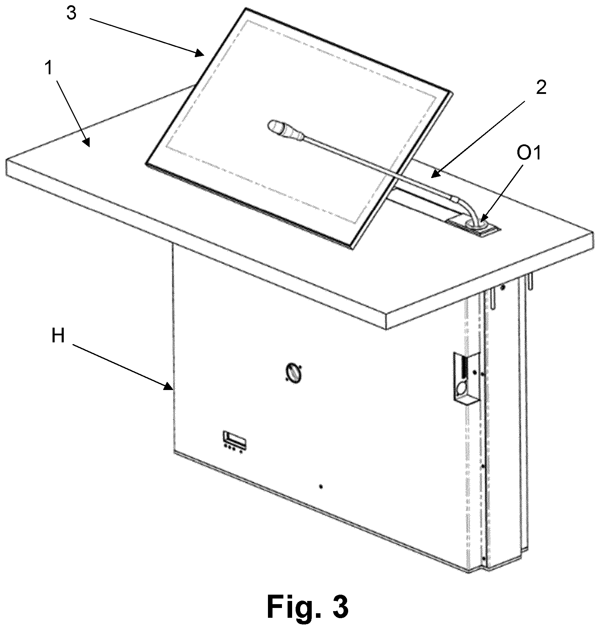

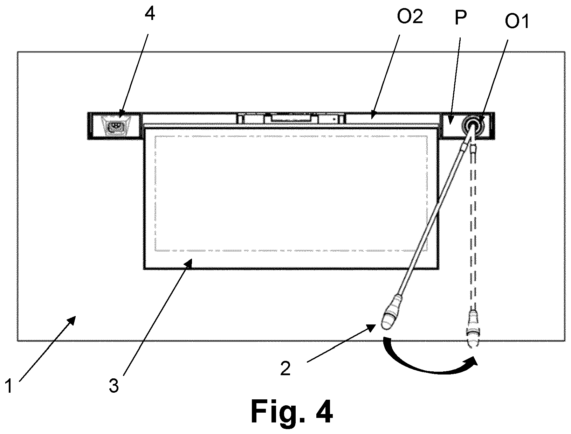

However, at the position illustrated at Figures 3 and 4, the retractable screen 3 is already at an inclined position at which its lower edge is approached to a user (not shown) placed in front of the retractable screen 3, to facilitate viewing of the contents displayed thereon by that user.

In addition, in Figure 4, the bendable elongate microphone 2 has been bent to orient the same towards a user (not shown) placed in front of the retractable screen 3, so that the bending action has put the bendable elongate microphone 2 in a position that, in case its lowering linear displacement was initiated without rotating the same, bendable elongate microphone could collide with the retractable screen 3.

To avoid that collision to occur, the concealable apparatus assembly of the present further comprises rotation means configured and arranged to rotate the bendable elongate microphone 2 about the longitudinal axis, in a first direction a determined number of degrees, previously or during an initial portion of said lowering linear displacement. For the embodiment illustrated in Figure 4, that first direction is counterclockwise (as indicated by the arrow line) towards the position at which the bendable elongate microphone 2 has been drawn in dashed lines, i.e. away from the retractable screen 3.

The retractable screen 3 is configured and arranged to move linearly, along a further longitudinal axis parallel to the longitudinal axis, between a concealed position and a revealed position, through a further through opening O2 (see figure 4) adjacent he through opening O1 (for the illustrated embodiment, through opening O1 is defined in a plate P fitted into further opening 02).

During that lowering linear displacement, the bendable elongate microphone 2 is straighten out through friction with the contour of the through opening O1.

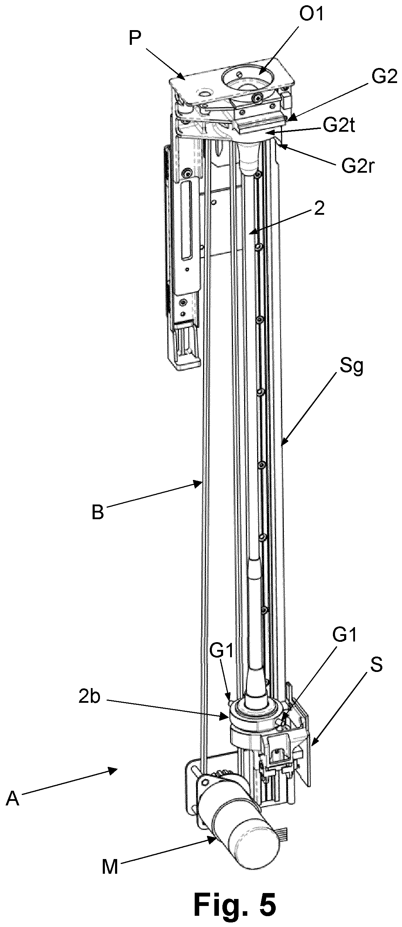

Figures 5 to 9 show the bendable elongate microphone 2 and associated mechanisms.

Specifically, Figure 5, shows the bendable elongate microphone at its concealed position, placed coaligned with the through opening O1 of plate P, supported by the mobile support structure S, particularly a carriage S, through support base 2b (which is rotatable at least the above mentioned number of degrees), and a linear actuator A for providing the linear movement of the carriage S and bendable elongate microphone 2. For the illustrated embodiment, the linear actuator A comprises a motor M or similar device (servo motor, solenoid, etc.) and a belt mechanism B (and associated gears) to linearly move the carriage S through guide Sg.

The concealable apparatus assembly of the present invention further comprising a guide arrangement to guide along a guide path a support base 2b of the bendable elongate microphone 2 at least during the initial portion of the lowering linear displacement to rotate together with the bendable elongate microphone 2 about the longitudinal axis, along the first direction, wherein said guide path includes a circumferential component and a longitudinal component.

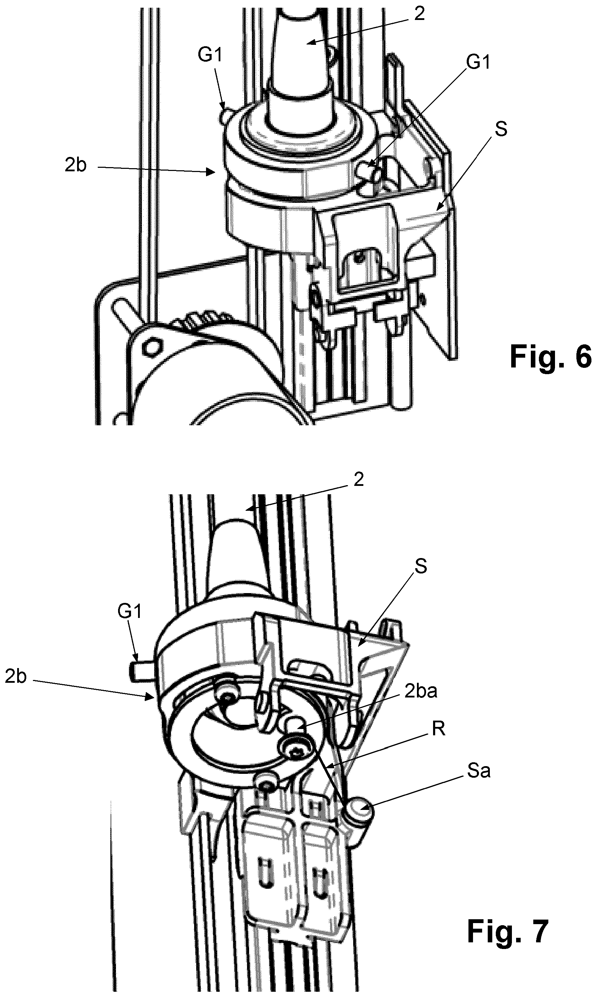

As shown especially in Figure 6, the guide arrangement comprises two pins G1 radially projecting from locations of the support base 2b positioned at 180° to each other.

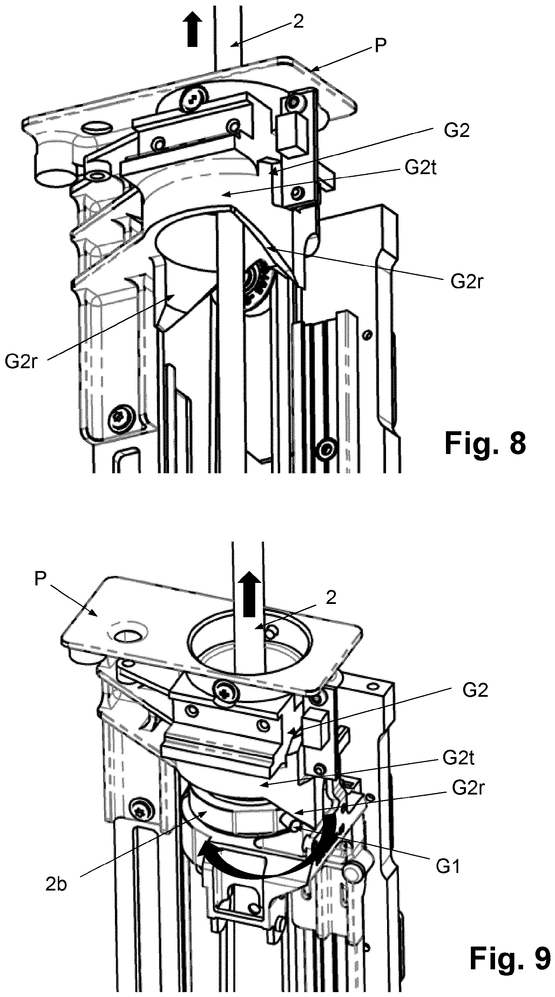

As shown especially in Figure 8, the guide arrangement further comprises a guide part G2 that comprises a tubular part G2t projecting, when attached thereto, from the hidden face of the plate P (and thus of board 1), in the region adjacent to the contour of the through opening O1. The tubular part G2t is coaligned with the through opening O1 and allows the bendable elongate microphone 2 to pass therethrough during the lifting and lowering linear displacements.

The tubular part G2t defines at a free edge thereof two ramp portions G2tr to respectively interact with the two pins G1, so that the pins G1 contact onto and slide along the ramps portions G2t to travel along the above mentioned guide path, as shown in Figure 9.

For the embodiment illustrated, as shown in Figure 7, the rotation means comprise a tensile spring R (schematically depicted) configured and arranged to store elastic potential energy, and configured and arranged to rotate the bendable elongate microphone 2 along the first direction a determined number of degrees by releasing the stored elastic potential energy thereon during said initial portion of said lowering linear displacement.

The tensile spring R has an end connected to the support base 2b, particularly to the downwardly projecting screw 2ba and another end connected to a portion Sa of the carriage S.

The rotation means are further configured and arranged to rotate the support base 2b (and thus the bendable elongate microphone 2) about the longitudinal axis, in a second direction (clockwise, for the illustrated embodiment), opposite to the first direction, a determined number of degrees, during a final portion of the lifting linear displacement (as shown in Figure 9), wherein the rotation means, bendable elongate microphone 2 and tensile spring R are configured and arranged so that during said rotation along the second direction the spring R is stretched so that is elastically deformed to store the elastic potential energy.

Therefore, for that illustrated embodiment, the spring R tries to return to its original position, but the support base 2b is locked (locking mechanism not shown) to avoid that to happen, until a control order is received or emitted by the control means (not shown) to initiate the rotation (counterclockwise, for the illustrated embodiment), and the lowering linear displacement.

A person skilled in the art could introduce changes and modifications in the embodiments described without departing from the scope of the invention as it is defined in the attached claims.

## Claims

1. A concealable apparatus assembly, comprising:
- a support structure (H) configured to be arranged under a hidden face of a board (1), or panel, in a region adjacent to the contour of a through opening (O1) thereof or of a plate (P) fitted in a through opening thereof; and
- a bendable elongate apparatus (2) and a mobile support structure (S) supporting said bendable elongate apparatus (2), wherein said mobile support structure (S) is fixed in a guided manner to said support structure (H) to move linearly, together with the bendable elongate apparatus (2), along a longitudinal axis:
- in a lifting linear displacement, between a concealed position at which when the support structure (H) is arranged under said hidden face of said board (1), or panel, and the bendable elongate apparatus (2) does not protrude through said through opening (O1), and a revealed position at which the bendable elongate apparatus (2) protrudes above the board (1), or panel, through the through opening (O1), and
- in a lowering linear displacement, between said revealed position and said concealed position;
**characterized in that** the concealable apparatus assembly further comprises rotation means configured and arranged to rotate the bendable elongate apparatus (2) about said longitudinal axis, in a first direction a determined number of degrees, previously or during an initial portion of said lowering linear displacement.

2. The concealable apparatus assembly according to claim 1, wherein said rotation means comprise a spring (R) storing or configured and arranged to store elastic potential energy, and configured and arranged to rotate the bendable elongate apparatus (2) along said first direction a determined number of degrees by releasing the stored elastic potential energy thereon during said initial portion of said lowering linear displacement.

3. The concealable apparatus assembly of claim 2, wherein said spring (R) is one of a tensile spring (R) and a compression spring (R), with an end connected to a support base (2b) of the bendable elongate apparatus (2) and another end connected to a non-rotatable part of the concealable apparatus assembly.

4. The concealable apparatus assembly of claim 3, wherein said non-rotatable part is defined by a portion (Sa) of the mobile support structure (S), the bendable elongate apparatus (2) being rotatably supported in said mobile support structure (S).

5. The concealable apparatus assembly of any of claims 2 to 4, wherein said rotation means are further configured and arranged to rotate the bendable elongate apparatus (2) about said longitudinal axis, in a second direction, opposite to the first direction, a determined number of degrees, during a final portion of said lifting linear displacement, wherein the rotation means, bendable elongate apparatus (2) and spring (R) are configured and arranged so that during said rotation along said second direction the spring (R) is elastically deformed to store said elastic potential energy.

6. The concealable apparatus assembly of any of the previous claims, further comprising a guide arrangement to guide along a guide path the bendable elongate apparatus (2) at least during said initial portion of said lowering linear displacement to rotate about said longitudinal axis, along said first direction, wherein said guide path includes a circumferential component and a longitudinal component.

7. The concealable apparatus assembly of claim 6 when depending on claim 5, wherein said guide arrangement is configured and arranged to guide along said guide path the bendable elongate apparatus (2) also during the final portion of the lifting linear displacement to rotate together with the bendable elongate apparatus (2) about said longitudinal axis, along the second direction.

8. The concealable apparatus assembly of claim 6 or 7, wherein said guide arrangement is configured and arranged to guide along said guide path a support base (2b) of the bendable elongate apparatus (2) to rotate together with the bendable elongate apparatus (2) about said longitudinal axis.

9. The concealable apparatus assembly of claim 7 or 8, wherein said guide arrangement comprises at least one pin (G1) and a guide part (G2), wherein one of the at least one pin (G1) and guide part (G2) is attached to the bendable elongate apparatus (2) or support base (2b) and the other of the at least one pin (G1) and guide part (G2) is configured to be arranged under said hidden face of a board (1), or panel, in said region adjacent to the contour of said through opening (O1), wherein the at least one pin (G1) and guide part (G2) are configured and arranged so that said at least one pin (G1) interacts with the guide part (G2) to travel along said guide path.

10. The concealable apparatus assembly of claim 9 when depending in claim 8, wherein said at least one pin (G1) projects from said support base (2b) and the guide part (G2) is configured to be arranged under the hidden face of said board (1), or panel, in the region adjacent to the contour of the through opening (O1).

11. The concealable apparatus assembly of claim 10, wherein the guide part (G2) comprises at least one ramp portion (G2r) onto and along which the at least one pin (G1) slides along the guide path.

12. The concealable apparatus assembly of claim 11, wherein the guide part (G2) comprises a tubular part (G2t) projecting, when attached thereto, from the hidden face of the board (1), or panel, in the region adjacent to the contour of the through opening (O1), said tubular part (G2t) being coaligned with the through opening (O1) and allowing the bendable elongate apparatus (2) to pass therethrough during said lifting and lowering linear displacements, the tubular part (G2t) defining at a free edge thereof said at least one ramp portion ((G2tr) to interact with the at least one pin (G1) that radially projects from the support base (2b).

13. The concealable apparatus assembly of any of claims 6 to 12, comprising a linear actuator (A) for providing said linear movement of the mobile support structure (S) and bendable elongate apparatus (2), and also for providing said rotation of the bendable elongate apparatus (2) by making the same follow said guide path when being linearly moved.

14. The concealable apparatus assembly of claim 1, wherein said rotation means comprise a rotary actuator configured and arranged to rotate the bendable elongate apparatus (2) about said longitudinal axis, along said first direction a determined number of degrees, previously or during an initial portion of said lowering linear displacement.

15. The concealable apparatus assembly of any of the previous claims, further comprising a retractable screen (3) also configured and arranged to move linearly, along a further longitudinal axis parallel to said longitudinal axis, between a concealed position and a revealed position, through a further through opening (O2) adjacent said through opening (O1), or through the same through opening (O1), wherein the rotation of the bendable elongate apparatus (2) about the longitudinal axis, along the first direction a determined number of degrees, previously or during the initial portion of said lowering linear displacement, is made to avoid interference of the bendable elongate apparatus (2) with said retractable screen (3), the first direction causing the bendable elongate apparatus (2) move away from said retractable screen (3).
